Europäisches Patentamt

European Patent Office

Office européen des brevets

(11) Publication number: **0 282 165 B1**

# EUROPEAN PATENT SPECIFICATION

(45) Date of publication of the patent specification:
27.06.90

(51) Int. Cl.⁵: **C01B 3/50, F25J 3/02, C01B 23/00**

(21) Application number: **88301113.2**

(22) Date of filing: **10.02.88**

(54) Method and plant for recovering hydrogen and argon from ammonia synthesis purge gas.

(30) Priority: **02.03.87 GB 8704836**

(43) Date of publication of application:
**14.09.88 Bulletin 88/37**

(45) Publication of the grant of the patent:
**27.06.90 Bulletin 90/26**

(84) Designated Contracting States:
**DE ES FR IT NL**

(56) References cited:
**GB-A- 2 030 973
US-A- 3 675 434**

**CHEMICAL ABSTRACTS, vol. 88, no. 20, 15 May 1978, Columbus, OH (US); p. 124, no. 138639p**

(73) Proprietor: **AIR PRODUCTS AND CHEMICALS, INC., P.O. Box 538, Allentown, Pennsylvania 18105(US)**

(72) Inventor: **Allam, Rodney John, "Westacre" Guildown Road, Guildford Surrey(GB)**
Inventor: **O'Reilly, Richard, 82 Kennel Lane, Fetcham Surrey(GB)**
Inventor: **Bassett, John Dollin, 18 Hill Crescent, Surbiton Surrey(GB)**

(74) Representative: **Lucas, Brian Ronald, Lucas, George & Co. 135 Westhall Road, Warlingham Surrey CR3 9HJ(GB)**

## Description

This invention relates to a method and a plant for recovering hydrogen and argon from ammonia synthesis purge gas.

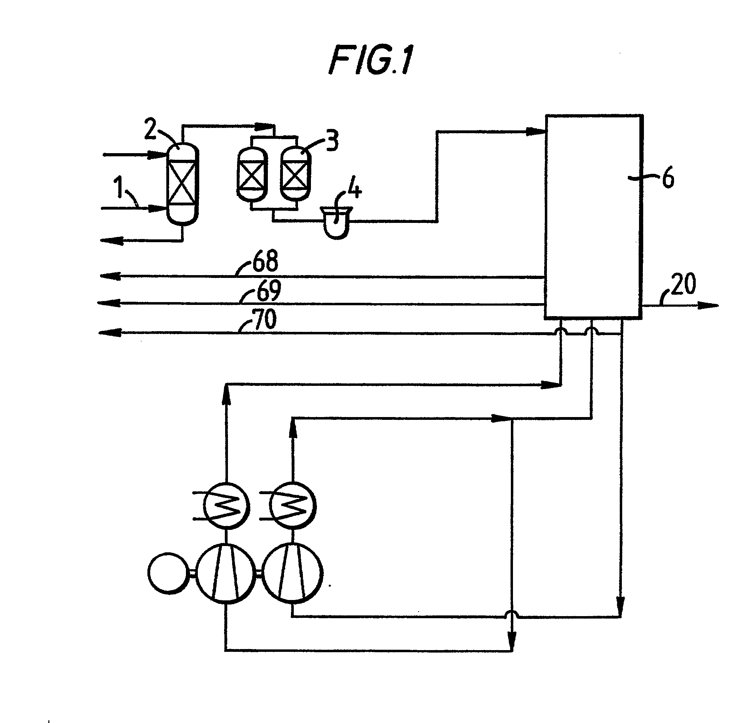

Figure 1 is a simplified flowsheet of our previous (unpublished) plant for recovering hydrogen and argon from ammonia synthesis purge gas.

The feed 1, which comprises (by volume) 63.32% hydrogen
20.38% nitrogen
4.31% argon
10.00% methane; and
1.99% ammonia at -23°C and 95.0 bar A is first passed through a water wash column 2 to remove the ammonia and then a dryer 3 to remove the water. The feed, now at 12°C, is then passed via a dust filter 4 into a cold box 6. A hydrogen rich product is recovered from pipe 68, whilst substantially pure argon is recovered from pipe 20. A nitrogen rich stream is recovered from pipe 70 whilst fuel gas is recovered from pipe 69.

The power consumed in recovering the argon is approximately 1175 kW/tonne argon.

The object of at least preferred embodiments of the invention is to reduce the power consumed in recovering the argon.

This is achieved by first removing ammonia and water vapour from the feed and then expanding the feed through an expander. In the preferred embodiment described hereinafter, which utilises a generator loaded expander, the power consumed in recovering the argon is reduced to approximately 600 kW/tonne argon.

According to one aspect of the present invention, there is provided a method for recovering hydrogen and argon from ammonia synthesis purge gas, which method comprises the steps of scrubbing said gas to remove ammonia, drying said gas to remove water vapour and cryogenically separating the dry, ammonia free gas to recover a hydrogen rich stream and argon, characterized in that the dry, ammonia free gas is work expanded prior to being cryogenically separated.

Preferably, the gas is expanded in a generator loaded expander or a compressor loaded expander.

Typically the temperature of the gas immediately prior to expansion will be between 0°C and 40°C, and more preferably between 5°C and 15°C.

Advantageously, the gas is expanded from between 70 bar A and 250 bar A to between 15 bar A and 80 bar A. More preferably the gas will be expanded from between 70 bar A and 150 bar A to between 20 bar A and 60 bar A.

The method is particularly (but not exclusively) advantageous when the cryogenic separation is carried out by a method comprising the steps of partially condensing the expanded, dry, ammonia free gas to provide a liquid fraction and a gaseous hydrogen rich product, separating the gaseous hydrogen rich product from the liquid fraction, removing methane (if any) from said liquid fraction, separating the components of said liquid fraction into a stream of substantially pure liquid argon and a nitrogen rich gas, compressing said nitrogen rich gas, cooling said compressed nitrogen rich gas, and using the compressed nitrogen rich gas to facilitate the separation of the components of said liquid fraction.

Advantageously, the compressed nitrogen rich gas is divided into two streams, one of which is expanded through a nitrogen expander and used to cool the other stream which other stream is subsequently at least partially condensed, and used to facilitate the separation of the components of said liquid fraction.

More advantageously, the nitrogen rich gas is compressed to an intermediate pressure, combined with nitrogen rich gas from said nitrogen expander, and the combined stream compressed to provide said compressed nitrogen rich gas.

Preferably, the compressed nitrogen rich gas is cooled by heat exchange with at least the gaseous hydrogen rich product.

If desired, the compressed nitrogen rich gas may be cooled by heat exchange with at least expanded dry, ammonia free gas.

According to another aspect of the present invention there is provided a plant for recovering hydrogen and argon from ammonia synthesis purge gas which plant comprises a scrubber to remove ammonia, a drier to remove water vapour and a cryogenic unit to cryogenically recover a hydrogen rich stream and argon, characterized in that said plant includes an expander arranged to expand gas from said drier into said cryogenic unit.

Preferably said expander is a generator loaded expander although it could comprise for example one part of an expander/compressor arrangement with the compressor arranged to compress another process stream.

Advantageously, the cryogenic unit comprises at least one heat exchanger for partially condensing dry, ammonia free gas from said expander, a phase separator for separating, in use, the liquid fraction thus formed from gaseous, hydrogen rich product, a fractionation column for separating the components of said liquid fraction into liquid argon and a nitrogen rich gas, a compressor unit for compressing said nitrogen rich gas, at least one heat exchanger to cool said compressed nitrogen rich gas, means to at least partially condense at least part of said compressed nitrogen rich gas, and a pipe to introduce the condensed gas into said fractionation column as reflux.

Preferably, the cryogenic unit also includes an auxiliary fractionation column for removing methane (if any) from said liquid fraction.

More advantageously, the cryogenic unit further comprises a generator loaded nitrogen expander arranged to expand part of the compressed nitrogen rich gas and a heat exchanger to bring at least part of the expanded nitrogen rich gas into heat exchange with the balance of said compressed nitrogen rich gas.

Preferably, said compressor unit comprises a first compressor for compressing said gas to an intermediate pressure, a junction for combining compressed gas from said first compressor with expanded nitrogen from said heat exchanger, and a second compressor for compressing the combined stream.

Advantageously, the plant includes a heat exchanger arranged to bring, in use, the hydrogen rich stream into heat exchange with compressed nitrogen rich gas. Alternatively, or in addition, the plant may include a heat exchanger arranged to bring, in use, the compressed nitrogen rich gas into heat exchange with expanded dry, ammonia free gas.

For a better understanding of the invention and to show how the same may be carried into effect reference will now be made, by way of example, to the accompanying drawings in which:-

Figure 1 is a simplified flow sheet of our previous plant;
Figure 2 is a simplified flowsheet of a plant in accordance with the invention; and
Figure 3 is a simplified flowsheet showing the components within the cold box of the plant shown in Figure 2.

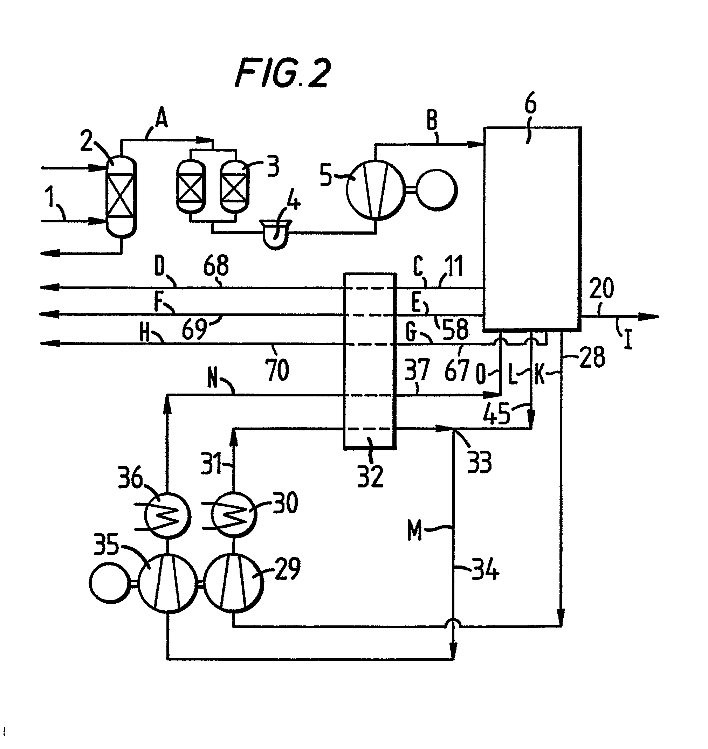

Referring to Figure 2, 30670 nm³/h of a feed gas comprising (nm³/h)
19419 hydrogen
6252 nitrogen
1323 argon
3066 methane; and
610 ammonia
are introduced through a pipe 1 at bar A and -23°C.

The feed gas is then passed through a water scrubber 2 where the ammonia in the feed is absorbed and the gas is warmed to 12°C. The feed gas is then passed through driers 3 to remove all the water. After passing through dust filter 4 the feed gas is expanded to 51.7 bar A in generator loaded expander 5. The feed gas (30060 nm³/h) leaves the expander 5 at -17°C and enters cold box 6 at -17°C.

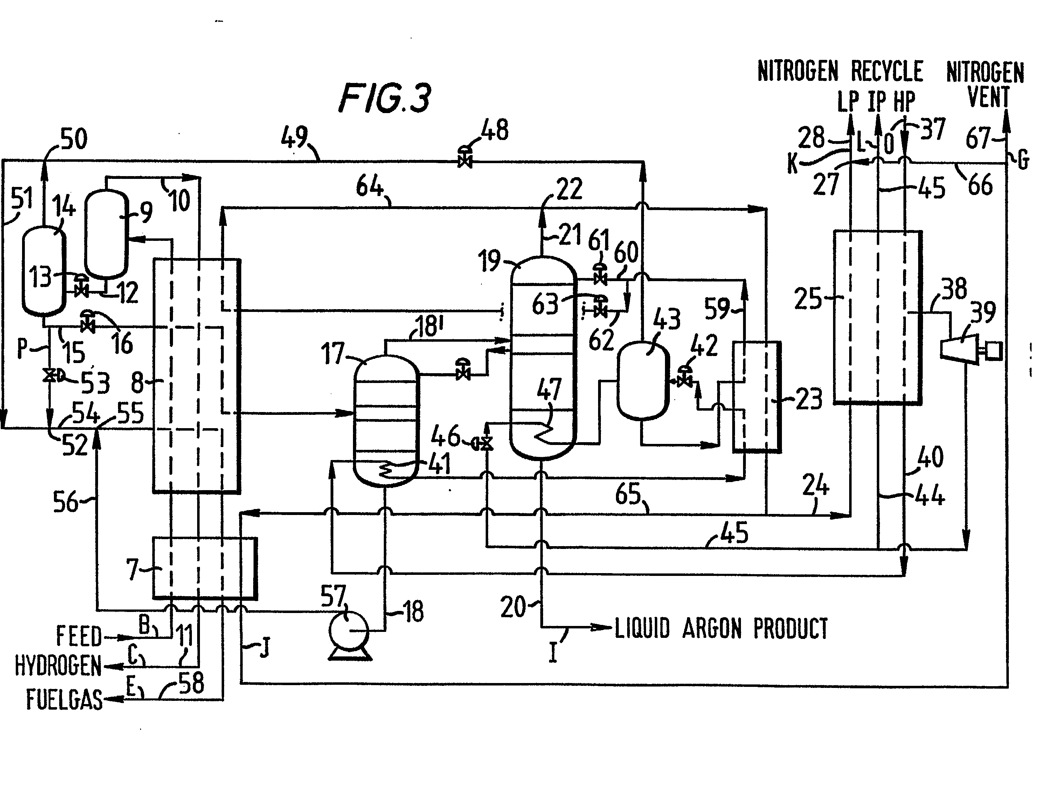

Turning now to Figure 3, the feed has is progressively cooled and partially condensed in heat exchangers 7 and 8. The liquid and vapour are separated in phase separator 9. The vapour, comprising (nm³/h)
18743 hydrogen
1248 nitrogen
113 argon
49 methane
leaves the phase separator 9 through pipe 10 and is reheated in heat exchangers 8 and 7. The vapour leaves the cold box 6 as hydrogen rich gas through pipe 11 at -19°C and a pressure of 50.2 bar A.

The liquid from the phase separator 9 passes through pipe 12 and is let down to approximately 2.3 bar A across valve 13. The vapour and liquid thus formed are separated in phase separator 14.

The liquid from phase separator 14 is divided into a first stream 15 and a second stream. The first stream 15 is let down to 1.6 bar A across valve 16 and passes to heat exchanger 8 where it is partially vaporized. It is then introduced into a first fractionating column 17 where all the methane is removed as liquid via pipe 18.

The remaining argon and nitrogen leave the fractionating column 17 through pipe 18' and enter a fractionating column 19 where the nitrogen and argon are separated into a gaseous nitrogen rich stream and a liquid argon stream.

The liquid argon leaves the fractionating column 19 through pipe 20 at a rate of 870 nm³/h argon at 1.2 bar A and -184°C. The argon is substantially free from impurities.

The nitrogen rich stream leaves the fractionating column 19 through pipe 21. It is joined by further nitrogen from pipe 64 at junction 22. The combined nitrogen rich stream is then warmed in heat exchanger 23. The stream is then divided into a first nitrogen rich stream 24 and a second nitrogen rich stream 65. The first nitrogen rich stream 24 is warmed in heat exchanger 25 and, after being joined by nitrogen from line 66 at junction 27 leaves the cold box 6 through pipe 28 at a temperature of -19°C and a pressure of 1.2 bar A. The flow rate of this stream is 6105 nm³/h comprising (nm³/h
19 hydrogen
6055 nitrogen
31 argon.

For convenience the stream in pipe 28 will hereinafter be referred to as "LP nitrogen".

Referring now to Figure 2, the LP nitrogen is compressed in compressor 29 to about 5.6 bar A and, after being cooled against cooling water in aftercooler 30 is passed through pipe 31 to heat exchanger 32.

3

The nitrogen, which will hereinafter be referred to as "IP nitrogen" is joined by nitrogen from line 45 at junction 33 and the combined stream (11-21 nm³/h at a pressure of 5.6 bar A and a temperature of -18°C comprising (nm³/h-

34 hydrogen

10931 nitrogen

56 argon

is passed through line 34 to compressor 35 where it is compressed to 26.8 bar A. The compressed gas, which is hereinafter referred to as "HP nitrogen" is cooled to 30°C in aftercooler 36 and is subsequently cooled to -17°C in heat exchanger 32.

Turning back to Figure 3, the HP nitrogen enters the coldbox 6 via pipe 37. It is introduced into heat exchanger 25 and a side draw is taken off through line 38 and expanded through generator loaded expander 39. Part of the HP nitrogen leaves the heat exchanger 25 via pipe 40 and is passed through a reboiler/condenser 41 in the base of the fractionating column 17 where is condenses. It is then sub-cooled in heat exchanger 23 and let down to 5.5 bar A across valve 42. The two phase mixture thus formed is introduced into a phase separator 43.

The IP nitrogen leaving generator loaded expander 39 is divided into two streams. The first IP nitrogen stream is passed through line 44 into heat exchanger 25 which it leaves via pipe 45 at 5.7 bar A and -19°C. The flow comprises (nm³/h

15 hydrogen

4917 nitrogen

25 argon

and joins the remainder of the IP nitrogen at junction 33 (Figure 2).

The balance of the IP nitrogen from expander 39 passes through line 45 to valve 46 where it is let down to 5.5 bar A before being introduced into a reboiler/condenser 47 in the base of the fractionating column 19. The partially condensed nitrogen is then introduced into phase separator 43.

Vapour from the phase separator 43 is expanded to 2.3 bar A across valve 48 and passes through line 49 to junction 50 where it is joined by vapour from phase separator 14. The combined stream then passes through line 51 to junction 52 where it is joined by the second stream which has been expanded to 2.3 bar A across valve 53 and comprises 2031/nm³/h of gas comprising (nm³/h

6 hydrogen

1062 nitrogen

271 argon

692 methane.

The stream then passes through line 54 to junction 55 where it is joined by liquid methane from line 56 which has been pumped from line 18 by pump 57.

The new combined stream is vaporized and warmed in heat exchangers 8 and 7 and leaves the cold box 6 as fuel gas via line 58 at 2.2 bar A and -19°C. The flow rate is 5514 nm³/h comprising:-

665 hydrogen

1510 nitrogen

322 argon

3017 methane.

The liquid from phase separator 43 is sub-cooled in heat exchanger 23 which is leaves through line 59. Part of the liquid passes through line 60 and let down valve 61 into fractionation column 19 where it acts as reflux. The balance passes through line 62 and let down valve 63 to heat exchanger 8 where it is vaporized. It then passes through lines 64 to junction 22 where it joins the stream from line 21. As indicated previously, the combined stream is warmed in heat exchanger 23 and divided into a first stream 24 and a second stream 65.

The second stream 65 is warmed in heat exchanger 7 and leaves the heat exchanger 7 at 1.2 bar A and -19°C. The flow rate is 4519 nm³/h, comprising nm³/h.

14 hydrogen

4482 nitrogen

23 argon.

1056 m /h of this stream are drawn off through line 66 whilst the balance leaves the cold box 6 through line 67.

The streams in pipes 11, 58 and 67 pass through heat exchanger 32 and leave the plant at 7°C through lines 68, 69 and 70 respectively (fig. 2).

The following table shows the composition, temperature and pressure of the streams at points A-P of the plant.

Various modifications to the plant shown in Figures 2 and 3 are envisaged, for example the expander 39 may be omitted if it is not required to make argon as liquid or only a small quantity of argon as liquid is required. If desired, the dry, ammonia free gas leaving the expander 5 may be used to cool the compressed nitrogen rich gas. The plant may incorporate a single compressor instead of two. Furthermore it may be desirable to incorporate more than two compressors.

| STREAM | A | B | C | D |
|---|---|---|---|---|
| Hydrogen | 19419 | 19419 | 18743 | 18743 |
| Nitrogen | 6252 | 6252 | 1248 | 1248 |
| Argon | 1323 | 1323 | 113 | 113 |
| Methane | 3066 | 3066 | 49 | 49 |
| Ammonia | 1 | | | |
| Water | 20 | | | |
| Total | 30081 | 30060 | 20153 | 20153 |
| Press. Bar A | 95.0 | 51.7 | 50.2 | 50.1 |
| Temp °C | 12 | −17 | −19 | 7 |

| STREAM | E | F | G | H |
|---|---|---|---|---|
| Hydrogen | 665 | 665 | 11 | 11 |
| Nitrogen | 1510 | 1510 | 3434 | 3434 |
| Argon | 322 | 322 | 18 | 18 |
| Methane | 3017 | 3017 | | |
| Ammonia | | | | |
| Water | | | | |
| Total | 5514 | 5514 | 3463 | 3463 |
| Press. Bar A | 2.2 | 2.0 | 1.2 | 1.1 |
| Temp °C | −19 | 7 | −19 | 7 |

| STREAM | I | J | K | L |
|---|---|---|---|---|
| Hydrogen | | 14 | 19 | 15 |
| Nitrogen | | 4482 | 6055 | 4917 |
| Argon | 870 | 23 | 31 | 25 |
| Methane | | | | |
| Ammonia | | | | |
| Water | | | | |
| Total | 870 | 4519 | 6105 | 4957 |
| Press. Bar A | 1.2 | 1.2 | 1.2 | 5.7 |
| Temp °C | −184 | −19 | −19 | −19 |

| STREAM | M | N | O | P |
|---|---|---|---|---|
| Hydrogen | 34 | 34 | 34 | 6 |
| Nitrogen | 10931 | 10911 | 10911 | 1062 |
| Argon | 56 | 56 | 56 | 271 |
| Methane | | | | 692 |
| Ammonia | | | | |
| Water | | | | |
| Total | 11021 | 11001 | 11001 | 2031 |
| Press. Bar A | 5.6 | 26.8 | 26.7 | 3.1 |
| Temp °C | −18 | 30 | −17 | −191 |

## Claims

1. A method for recovering hydrogen and argon from ammonia synthesis purge gas, which method comprises the steps of scrubbing said gas to remove ammonia, drying said gas to remove water vapour and cryogenically separating the dry, ammonia free gas to recover a hydrogen rich stream and argon, characterized in that the dry ammonia free gas is work expanded prior to being cryogenically separated.

2. A method according to Claim 1, wherein said gas is expanded in a generator loaded expander or a compressor loaded expander.

3. A method according to Claim 1 or 2, wherein the temperature of the gas immediately prior to expansion is between 0°C and 40°c.

4. A method according to Claim 3, wherein the temperature of the gas immediately prior to expansion is between 5°C and 15°C.

5. A method according to any preceding Claim, wherein said gas is expanded from between 70 bar A and 250 bar A to between 15 bar A and 80 bar A.

6. A method according to Claim 5, wherein said gas is expanded from between 70 bar A and 150 bar A to between 20 bar A and 60 bar A.

7. A method according to any preceding Claim, wherein said cryogenic separation is carried out by a method comprising the steps of partially condensing the expanded, dry, ammonia free gas to provide a liquid fraction and a gaseous hydrogen rich product, separating the gaseous hydrogen rich product from the liquid fraction, removing methane (if any) from said liquid fraction, separating the components of said liquid fraction into a stream of substantially pure liquid argon and a nitrogen rich gas, compressing said nitrogen rich gas, cooling said compressed nitrogen rich gas, and using the compressed nitrogen rich gas to facilitate the separation of the components of said liquid fraction.

8. A method according to Claim 7, wherein said compressed nitrogen rich gas is divided into two streams, one of which is expanded through a nitrogen expander and used to cool the other stream which other stream is subsequently at least partially condensed, and used to facilitate the separation of the components of said liquid fraction.

9. A method according to Claim 8, wherein said nitrogen rich gas is compressed to any intermediate pressure, combined with nitrogen rich gas from said nitrogen expander, and the combined stream compressed to provide said compressed nitrogen rich gas.

10. A method according to Claim 7, 8 or 9, including the step of cooling said compressed nitrogen rich gas by heat exchange with at least said gaseous hydrogen rich product.

11. A method according to Claim 7, 8, 9 or 10, including the step of cooling said nitrogen rich gas by heat exchange with at least said expanded dry, ammonia free gas.

12. A plant for recovering hydrogen and argon from ammonia synthesis purge gas which plant comprises a scrubber (2) to remove ammonia, a drier (3) to remove water vapour and a cryogenic unit (6) to cryogenically recover a hydrogen rich stream and argon, characterized in that said plant includes an expander (5) arranged to expand gas from said drier into said cryogenic unit (6).

13. A plant at claimed in Claim 12, wherein said expander (5) is a generator loaded expander.

14. A plant as claimed in Claim 12 or 13, wherein said cryogenic unit (6) comprises at least one heat exchanger (8) for partially condensing dry, ammonia free gas from said expander (5), a phase separator (9) for separating, in use, the liquid fraction thus formed from gaseous, hydrogen rich product, a fractionation column (19) for separating the components of said liquid fraction into liquid argon and a nitrogen rich gas, a compressor unit (29) for compressing said nitrogen rich gas, at least one heat exchanger (32) to cool said compressed nitrogen rich gas, means to at least partially condense at least part of said compressed nitrogen rich gas, and a pipe (60) to introduce the condensed gas into said fractionation column (19) as reflux.

15. A plant as claimed in Claim 14, including an auxiliary fractionation column (17) for removing methane (if any) from said liquid fraction.

16. A plant as claimed in Claim 14 or 15, wherein said cryogenic unit (6) further comprises a generator loaded nitrogen expander (39) arranged to expand part of the compressed nitrogen rich gas and a heat exchanger (25) to bring at least part of the expanded nitrogen rich gas into heat exchange with the balance of said compressed nitrogen rich gas.

17. A plant as claimed in Claim 16, wherein said compressor unit comprises a first compressor (29) for compressing said gas to an intermediate pressure, a junction (33) for combining compressed gas from said first compressor (29) with expanded nitrogen from said heat exchanger, and a second compressor (35) for compressing the combined stream.

18. A plant as claimed in any one of Claims 12 to 17, including a heat exchanger (32) arranged to bring, in use, said hydrogen rich stream into heat exchange with said compressed nitrogen rich gas.

19. A plant as claimed in any one of Claims 12 to 18, including a heat exchanger (32) arranged to bring, in use, said compressed nitrogen rich gas into heat exchange with expanded dry ammonia free gas.

## Revendications

1. Un procédé pour récupérer de l'hydrogène et de l'argon d'un gaz de purge de synthèse de l'ammoniac, lequel procédé comprend les étapes d'épuration dudit gaz pour éliminer l'ammoniac, séchage dudit gaz pour éliminer la vapeur d'eau et séparation cryogénique du gaz sec dépourvu d'ammoniac pour récuper un courant riche en hydrogène et de l'argon, caractérisé en ce que le gaz sec dépourvu d'ammonia est soumis à une détente énergétique avant d'être soumis à une séparation cryogénique.

2. Un procédé selon la revendication 1, dans lequel ledit gaz est détendu dans un détendeur chargé par un générateur ou un détendeur chargé par un compresseur.

3. Un procédé selon la revendication 1 ou 2, dans lequel la température du gaz immédiatement avant la détente est entre 0°C et 40°C.

4. Un procédé selon la revendication 3, dans lequel la température du gaz immédiatement avant la détente est entre 5°C et 15°C.

5. Un procédé selon l'une quelconque des revendications précédentes, dans lequel ledit gaz est détendu d'entre 70 bars A et 250 bars A à entre 15 bars A et 80 bars A.

6. Un procédé selon la revendication 5, dans lequel ledit gaz est détendu d'entre 70 bars A et 150 bars A à entre 20 bars A et 60 bars A.

7. Un procédé selon l'une quelconque des revendications précédentes, dans lequel ladite séparation cryogénique est effectuée selon un procédé comprenant les étapes de condensation partielle du gaz sec dépourvu d'ammoniac détendu, pour fournir une fraction liquide et un produit gazeux riche en hydrogène, séparation du produit gazeux riche en hydrogène d'avec la fraction liquide, élimination du méthane (éventuel) de ladite fraction liquide, séparation des composants de ladite fraction liquide en un courant d'argon liquide essentiellement pur et un gaz riche en azote, compression dudit gaz riche en azote, refroidissement dudit gaz riche en azote comprimé et utilisation du gaz riche en azote comprimé pour faciliter la séparation des composants de ladite fraction liquide.

8. Un procédé selon la revendication 7, dans lequel ledit gaz riche en azote comprimé est divisé en deux courants dont l'un est détendu dans un détendeur d'azote et utilisé pour refroidir l'autre courant, lequel autre courant est ensuite au moins partiellement condensé et utilisé pour faciliter la séparation des composants de ladite fraction liquide.

9. Un procédé selon la revendication 8, dans lequel ledit gaz riche en azote est comprimé à une pression intermédiaire, combiné au gaz riche en azote dudit détendeur d'azote, et le courant combiné est comprimé pour fournir ledit gaz riche en azote comprimé.

10. Un procédé selon la revendication 7, 8 ou 9, comprenant l'étape de refroidissement dudit gaz riche en azote comprimé par échange de chaleur avec au moins ledit produit riche en hydrogène gazeux.

11. Un procédé selon la revendication 7, 8, 9 ou 10, comprenant l'étape de refroidissement dudit gaz riche en azote par échange de chaleur avec au moins ledit gaz sec dépourvu d'ammoniac détendu.

12. Un dispositif pour récupérer l'hydrogène et l'argon d'un gaz de purge de synthèse de l'ammoniac, lequel dispositif comprend un épurateur (2) pour éliminer l'ammoniac, un sécheur (3) pour éliminer la vapeur d'eau et une unité cryogénique (6) pour la récupération cryogénique d'un courant riche en hydrogène et d'argon, ce dispositif étant caractérisé en ce qu'il comprend un détendeur (5) conçu pour détendre le gaz dudit sécheur dans ladite unité cryogénique (6).

13. Un dispositif selon la revendication 12, dans lequel ledit détendeur (5) est un détendeur chargé par un générateur.

14. Un dispositif selon la revendication 12 ou 13, dans lequel ladite unité cryogénique (6) comprend au moins un échangeur de chaleur (8) pour condenser partiellement le gaz sec dépourvu d'ammoniac dudit détendeur (5), un séparateur de phases (9) pour séparer, lors du fonctionnement, la fraction liquide ainsi formée d'avec le produit gazeux riche en hydrogène, une colonne de fractionnement (19) pour séparer les composants de ladite fraction liquide en argon liquide et en un gaz riche en azote, une unité de compression (29) pour comprimer ledit gaz riche en azote, au moins un échangeur de chaleur (32) pour refroidir ledit gaz riche en azote comprimé, un dispositif pour condenser au moins partiellement au moins une partie dudit gaz riche en azote comprimé, et une canalisation (60) pour introduire le gaz condensé dans ladite colonne de fractionnement (19) comme reflux.

15. Un dispositif selon la revendication 14 comprenant une colonne de fractionnement auxiliaire (17) pour éliminer le méthane (éventuel) de ladite fraction liquide.

16. Un dispositif selon la revendication 14 ou 15, dans lequel ladite unité cryogénique (6) comprend de plus un détendeur d'azote (39) chargé par un générateur, disposé pour détendre une partie du gaz riche en azote comprimé, et un échangeur de chaleur (25) pour mettre au moins une partie du gaz riche en azote détendu en échange de chaleur avec le reste dudit gaz riche an azote comprimé.

17. Un dispositif selon la revendication 16, dans lequel ladite unité de compression comprend un premier compresseur (29), pour comprimer ledit gaz à une pression intermédiaire, un raccordement (33), pour combiner le gaz comprimé dudit premier compresseur (29) avec l'azote détendu dudit échangeur de chaleur, et un second compresseur (35) pour comprimer le courant combiné.

18. Un dispositif selon l'une quelconque des revendications 12 à 17 comprenant un échangeur de chaleur (32) conçu pour, lors de l'utilisation, mettre ledit courant riche en hydrogène en échange de chaleur avec ledit gaz riche en azote comprimé.

19. Un dispositif selon l'une quelconque des revendications 12 à 18 comprenant un échangeur de chaleur (32) conçu pour, lors de l'utilisation, mettre ledit gaz riche en azote comprimé en échange de chaleur avec le gaz sec dépourvu d'ammoniac détendu.

**Patentansprüche**

1. Verfahren zur Gewinnung von Wasserstoff und Argon aus dem Reinigungsgas der Ammoniaksynthese, wobei dieses Verfahren die Schritte umfaßt: Wäsche des Gases, um Ammoniak zu entfernen, Trocknen des Gases, um Wasserdampf zu entfernen, und Tieftemperaturtrennung des trockenen ammoniakfreien Gases, um einen wasserstoffreichen Strom und Argon gewinnen, dadurch gekennzeichnet, daß das trockene ammoniakfreie Gas vor der Tieftemperaturtrennung durch Arbeit expandiert wird.

2. Verfahren nach Anspruch 1, worin das Gas in einer mit einem Generator belasteten Expansionsvorrichtung oder einer mit einem Kompressor belasteten Expansionsvorrichtung expandiert wird.

3. Verfahren nach Anspruch 1 oder 2, worin die Temperatur des Gases unmittelbar vor der Expansion zwischen 0°C und 40°C liegt.

4. Verfahren nach Anspruch 3, worin die Temperatur des Gases unmittelbar vor der Expansion zwischen 5°C und 15°C liegt.

5. Verfahren nach einem der vorstehenden Ansprüche, worin das Gas von zwischen 70 bar A und 250 bar A auf zwischen 15 bar A und 80 bar A expandiert wird.

6. Verfahren nach Anspruch 5, worin das Gas von zwischen 70 bar A und 150 bar A auf zwischen 20 bar A und 60 bar A expandiert wird.

7. Verfahren nach einem der vorstehenden Ansprüche, worin die Tieftemperaturtrennung durch ein Verfahren durchgeführt wird, welches die Schritte umfaßt: teilweise Kondensation des expandierten trockenen ammoniakfreien Gases, um eine flüssige Fraktion und ein gasförmiges wasserstoffreiches Produkt zu schaffen, Trennung des gasförmigen wasserstoffreichen Produktes von der flüssigen Fraktion, Entfernung des Methans (falls vorhanden) von der flüssigen Fraktion, Trennung der Komponenten der flüssigen Fraktion in einen Strom aus im wesentlichen reinem flüssigen Argon und ein stickstoffreiches Gas, Kompression des stickstoffreichen Gases, Abkühlung des komprimierten stickstoffreichen Gases und Verwendung des komprimierten stickstoffreichen Gases, um die Trennung der Komponenten der flüssigen Fraktion zu erleichtern.

8. Verfahren nach Anspruch 7, worin das komprimierte stickstoffreiche Gas in zwei Ströme geteilt wird, einer davon wird durch die Stickstoffexpansionsvorrichtung expandiert und zur Kühlung des anderen Stromes verwendet, der andere Strom wird anschließend zumindest teilweise kondensiert und zur Erleichterung der Trennung der Komponenten der flüssigen Fraktion verwendet.

9. Verfahren nach Anspruch 8, worin das stickstoffreiche Gas auf einen Zwischendruck komprimiert wird, mit dem stickstoffreichen Gas von der Stickstoffexpansionsvorrichtung kombiniert wird, und dieser kombinierte Strom komprimiert wird, um das komprimierte stickstoffreiche Gas zu liefern.

10. Verfahren nach Anspruch 7, 8 oder 9, das den Schritt der Abkühlung des komprimierten stickstoffreichen Gases durch Wärmeaustausch mit zumindest dem gasförmigen wasserstoffreichen Produkt umfaßt.

11. Verfahren nach Anspruch 7, 8, 9 oder 10, das den Schritt der Abkühlung des stickstoffreichen Gases durch Wärmeaustausch mit zumindest dem expandierten trockenen ammoniakfreien Gas umfaßt.

12. Anlage zur Gewinnung von Wasserstoff und Argon aus dem Reinigungsgas der Ammoniaksynthese, wobei diese Anlage umfaßt: eine Waschvorrichtung (2) zur Entfernung von Ammoniak, eine Trockner (3) zur Entfernung von Wasserdampf und eine Tieftemperaturanlage (6) zur Tieftemperaturgewinnung des wasserstoffreichen Stromes und Argon, dadurch gekennzeichnet, daß die Anlage eine Expansionsvorrichtung (5) umfaßt, die so angeordnet ist, daß sie das Gas vom Trockner in die Tieftemperaturanlage (6) expandiert.

13. Anlage nach Anspruch 12, dadurch gekennzeichnet, daß die Expansionsvorrichtung (5) eine mit einem Generator belastete Expansionsvorrichtung ist.

14. Anlage nach Anspruch 12 oder 13, worin die Tieftemperaturanlage (6) zumindest einen Wärmeaustauscher (8) zur teilweisen Kondensation des trockenen ammoniakfreien Gases von der Expansionsvorrichtung (5), einen Phasenseparator (9), der bei Verwendung die so gebildete flüssige Fraktion vom gasförmigen wasserstoffreichen Produkt trennt, eine Fraktionierkolonne (19) zur Trennung der Komponenten der flüssigen Fraktion in flüssiges Argon und stickstoffreiches Gas, eine Kompressoranlage (29) zur Kompression des stickstoffreichen Gases, zumindest einen Wärmeaustauscher (32), um das komprimierte stickstoffreiche Gas abzukühlen, eine Einrichtung, um zumindest einen Teil des komprimierten stickstoffreichen Gases zumindest teilweise zu kondensieren, und eine Leitung (60) umfaßt, um das kondensierte Gas als Rückfluß in die Fraktionierkolonne (19) einzuführen.

15. Anlage nach Anspruch 14, die eine Hilfsfraktionierkolonne (17) umfaßt, um das Methan (falls vorhanden) aus der flüssigen Fraktion zu entfernen.

16. Anlage nach Anspruch 14 oder 15, worin die Tieftemperaturanlage (16) weiterhin eine mit einem Generator belastete Stickstoffexpansionsvorrichtung (39), die so angeordnet ist, daß sie einen Teil des komprimierten stickstoffreichen Gases expandiert, und einen Wärmeaustauscher (25) umfaßt, um zumindest einen Teil des expandierten stickstoffreichen Gases in Wärmeaustausch mit dem Rest dem komprimierten stickstoffreichen Gases zu bringen.

17. Anlage nach Anspruch 16, worin die Kompressoranlage einen ersten Kompressor (29) zur Kompression des Gases auf einen Zwischendruck, eine Verbindung (33) zur Kombination des komprimierten Gases vom ersten Kompressor (29) mit dem expandierten Stickstoff vom Wärmeaustauscher und einen zweiten Kompressor (35) zur Kompression dieses kombinierten Stromes umfaßt.

18. Anlage nach einem der Ansprüche 12 bis 17, die einen Wärmeaustauscher (32) umfaßt, der so angeordnet ist, daß er bei Verwendung den wasserstoffreichen Strom in Wärmeaustausch mit dem komprimierten stickstoffreichen Gas bringt.

19. Anlage nach einem der Ansprüche 12 bis 18, die einen Wärmeaustauscher (32) umfaßt, der so angeordnet ist, daß er bei Verwendung das komprimierte stickstoffreiche Gas in Wärmeaustausch mit dem expandierten trockenen ammoniakfreien Gas bringt.

# FIG.1

# FIG.2

FIG.3

NITROGEN RECYCLE  NITROGEN VENT

LP IP HP

FEED

HYDROGEN

FUELGAS

LIQUID ARGON PRODUCT

EP 0 282 165 B1